# EUROPÄISCHE PATENTANMELDUNG

(11) **EP 4 660 596 A1**
(43) Veröffentlichungstag der Anmeldung: **10.12.2025**
(21) Anmeldenummer: 25180306.0
(22) Anmeldetag: 03.06.2025
(51) Int. Cl.: G01H 1/00, B63B 79/10, B63B 79/20

(54) **VERFAHREN ZUR AKUSTISCHEN SELBSTDIAGNOSE EINSES WASSERFAHRZEUGS, INSBESONDERE EINES UNTERSEEBOOTES**

(30) Priorität: 05.06.2024 DE 102024115633
(71) Anmelder: TKMS GmbH, 24143 Kiel (DE); thyssenkrupp AG, 45143 Essen (DE)
(72) Erfinder: Druckenbrod, Markus, 22081 Hamburg (DE)
(74) Vertreter: thyssenkrupp Intellectual Property GmbH

(57) **Zusammenfassung**

Die vorliegende Erfindung betrifft ein Verfahren zur frühzeitigen Erkennung von Anomalien über Schallemissionen innerhalb des Wasserfahrzeugs 10 in einem Wasserfahrzeug 10, wobei das Verfahren die folgenden Schritte aufweist:
a) Einbau akustischer Sensoren 41, 42, 43, 44, 45, 46, 47 beim Bau des Wasserfahrzeug,
b) Verbinden der akustischen Sensoren 41, 42, 43, 44, 45, 46, 47 mit einem Datenverarbeitungssystem 20 des Wasserfahrzeugs 10, wobei das Datenverarbeitungssystem 20 eine selbstlernende Komponente zur Korrelation der von den akustischen Sensoren 41, 42, 43, 44, 45, 46, 47 empfangenen Daten mit Schiffszuständen aufweist,
c) Trainieren der selbstlernenden Komponente während der Seeerprobung des Wasserfahrzeug 10,
d) Kontinuierliche Selbstüberwachung zur Erkennung von Anomalien im Regelbetrieb,
e) Ausgabe einer Information über das Vorliegen einer Anomalie an die Besatzung.

## Beschreibung

Die Erfindung betrifft ein Wasserfahrzeug und ein Verfahren dafür, welches kontinuierlich die eigene Schallemission verwendet, um eine Zustandsüberwachung des Schiffes durchzuführen.

Ein Wasserfahrzeug , insbesondere ein Unterseeboot, ist vergleichsweise komplex und weist eine extrem hohe Integrationstiefe auf. Daher kann es schwierig sein, beispielsweise ein defektes Lager zu lokalisieren, insbesondere, da sich die Wirkung eines Defekts unter Umständen erst an ganz anderer Stelle auswirkt und damit offenkundig wird. Damit ist die Zuordnung zur eigentlichen Ursache oftmals sehr schwierig. Gleichzeitig kann ein solcher Defekt jedoch zu Geräuschemissionen führen, was wiederum die akustische Signatur des Unterseebootes vergrößert und so die Gefahr erhöht, dass ein Unterseeboot entdeckt wird. Gleichzeitig sorgt der Druckkörper eines Unterseebootes für einen abgeschlossenen Gasraum, indem Schall sich ausbreiten und daher auch in einfacher Weise detektieren lässt. Der Übergang zum Druckkörper und damit letztendlich auch ins umgebende Wasser ist durch die unterschiedliche Ausbreitungsgeschwindigkeit des Schalls in den unterschiedlichen Medien wiederum sehr komplex und führt insbesondere zu Reflexionserscheinungen am Druckkörper. Daher kann gerade das Innere des Druckkörpers in sehr begrenztem Maße als in sich geschlossenes System betrachtet werden.

Beispielsweise aus der WO 2021/144206 A1 ist bekannt, Sensoren an Bord eines Schiffes zu verteilen und mit einem zentralen EDV-System zu vernetzen.

Des Weiteren ist es bei Wasserfahrzeugen heutige Praxis im Falle eines Problems, Sensoren nachträglich einzubringen und mit einer externen EDV die erfassten Daten zu analysieren, um ein Problem zu lokalisieren. Solche Untersuchungen führen jedoch auch zu einer Verlängerung der Werft- und Liegezeiten, was wiederum die Einsatzbereitschaft herabsetzt. Des Weiteren können Sensoren natürlich nur an Positionen nachträglich angeordnet werden, welche auch zugänglich sind.

Hinzu kommt, dass bei Kriegsschiffen es ausscheidet, Daten vom Schiff beispielsweise an einen Hersteller oder einen Komponentenlieferanten zu übertragen. Klassische Systeme zu Predictive Maintenance sind daher nicht verwendbar, da aus den übertragenen Daten Informationen wie Missionen, Kurs, Position oder dergleichen abgeleitet werden könnten, die eine Gefährdung für das Kriegsschiff darstellen könnten. Weiter sind Kriegsschiffe praktisch alles Unikate, selbst Schiffe der gleichen Klasse weisen Unterschiede auf, sodass es praktisch keine für ein neues Schiff verwendbaren historischen Trainingsdaten geben kann.

Aus der KR 10 2023 172 129 A ist ein mobiles, installierbares Überwachungssystem vom Kameratyp zur Überprüfung des Betriebszustands von Außenanlagen unter Wasser bekannt.

Aus der DE 10 1022 209 652 A1 ist ein Signaturmanagementsystem bekannt.

Aus der DE 10 2023 102 469 A1 ist ein Unterseeboot und ein Verfahren zur aktiven Unterdrückung einer Ortungsschallwelle bekannt.

Aufgabe der Erfindung ist es, ein Verfahren bereitzustellen, mit dem ungewollte Geräuschentwicklung vermieden wird.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie den Zeichnungen.

Das erfindungsgemäße Verfahren dient zur frühzeitigen Erkennung von Anomalien über Schallemissionen innerhalb des Wasserfahrzeugs in einem Wasserfahrzeug.

Das Verfahren weist die folgenden Schritte auf:
a) Einbau akustischer Sensoren beim Bau des Wasserfahrzeug innerhalb des Wasserfahrzeugs,
b) Verbinden der akustischen Sensoren mit einem Datenverarbeitungssystem des Wasserfahrzeug, wobei das Datenverarbeitungssystem eine selbstlernende Komponente zur Korrelation der von den akustischen Sensoren empfangenen Daten mit Schiffszuständen aufweist,
c) Trainieren der selbstlernenden Komponente während der Seeerprobung des Wasserfahrzeug,
d) Kontinuierliche Selbstüberwachung zur Erkennung von Anomalien im Regelbetrieb,
e) Ausgabe einer Information über das Vorliegen einer Anomalie an die Besatzung.

Ziel ist es somit, die im Inneren entstehenden Schallemissionen möglichst auch im Inneren zu erfassen, um einen Hinweis auf eine Anomalie zu entdecken, möglichst lange, vor diese Anomalie eine nach außen wirkende Verschlechterung der akustischen Signatur durch eine ungewollte Schallemission bewirkt. Daher ist eine Erfassung innerhalb des Wasserfahrzeugs vorteilhaft.

Durch den Einbau der akustischen Sensoren in Schritt a) ist es möglich, diese Sensoren an beliebigen Stellen anzuordnen, also insbesondere auch an Stellen, die für eine spätere temporäre Anbringung zur Diagnose nicht zugänglich sind. Beispielsweise kann auch am Stevenrohr ein akustischer Sensor so in einfacher Weise angeordnet werden. Hierbei erfolgt die Anordnung der akustischen Sensoren insbesondere schiffstypisch entsprechend der Wahrscheinlichkeit des Auftretens einer Schallemission erzeugenden Anomalie. Hierbei kann zwischen drei verschiedenen Anordnungen beziehungsweise Arten von Sensoren unterschieden werden. Zum einen werden akustische Sensoren bevorzugt direkt an kritischen, meist stark bewegten Komponenten angeordnet, wo zum einen ein Verschleiß oder Versagen wahrscheinlich ist und zu einer Schallemission führen kann, beispielsweise Motoren und Lager. Zum anderen werden Räume mit einer Vielzahl an (bewegten oder auch durchströmten) Komponenten über Luftschallsensoren überwacht. So kann die Anzahl der Sensoren reduziert werden und so die Datenmenge, die später kontinuierlich analysiert werden muss, auf ein Mindestmaß reduziert werden. Als drittes werden akustische Sensoren an zentralen Komponenten, beispielsweise Rumpf oder Druckkörper, einer zentralen Hydraulikleitung oder dergleichen angeordnet. Hierdurch ist eine globale Erfassung möglich. Werden beispielsweise am Rumpf oder Druckkörper zwei oder mehr akustische Sensoren angeordnet, so kann bereits durch die Zeitdifferenz zwischen diesen Sensoren eine grobe Lokalisierung erfolgen. Somit unterscheidet sich der Einbau erfindungsgemäß von dem heutigen nachträglichen Anordnen in einem Wasserfahrzeug, da auch nicht oder schwer zugängliche Positionen erfasst werden können. Gleichzeitig unterscheidet es sich von klassischen Predictive Maintenance Systemen, die eine gezielte Einzelüberwachung, beispielsweise des Generators, machen. Ziel ist eben nicht nur die Zustandsüberwachung einzelner, gegebenenfalls kritischer, Komponenten, sondern vielmehr auch die Vermeidung von unnötigen Schallemissionen, welche die akustische Signatur negativ beeinflussen.

Ist das Wasserfahrzeug ein Unterwasserfahrzeug, so erfolgt der Einbau der akustischen Sensoren beim Bau des Wasserfahrzeug innerhalb des Druckkörpers.

Zusätzlich zu den in Schritt a) innerhalb des Wasserfahrzeugs angeordneten akustischen Sensoren können auch weitere akustische Sensoren im Außenbereich, insbesondere bei einem Unterwasserfahrzeug außerhalb des Druckkörpers angeordnet sein. Viele militärische Wasserfahrzeuge weisen ohnehin ein Sonar auf und haben somit ohnehin diese außerhalb angeordneten akustischen Sensoren für andere Aufgaben, die jedoch auch für das erfindungsgemäße Verfahren, wenigstens zeitweise, verwendet werden können. Der Nachteil der außen angeordneten Sensoren ist, dass dort die Geräusche insbesondere von Geräuschen aus der Umgebung stark überlagert werden, weshalb Sensoren im Inneren des Wasserfahrzeugs als notwendig angesehen werden.

Auch wenn im Inneren somit vorzugsweise im Inneren eines Druckkörpers bedeutet, so ist auch eine Anordnung und Erfassung, beispielsweise an einem Wellenlager zwischen Druckkörper und Außenhaut erfindungsgemäß bevorzugt.

Die akustischen Sensoren erfassen hierbei bevorzugt Das Frequenzspektrum, bevorzugt in einem bestimmten Frequenzband, beispielsweise zwischen 1 Hz und 100 kHz. Entsprechend wird bevorzugt frequenzabhängig in diesem Frequenzband die Amplitude erfasst. Gerade als Luftschallsensoren können auch Sensoren verwendet werden, die nur die Gesamtamplitude erfassen. Somit sind die von den akustischen Sensoren erfassten Daten frequenz- und/oder amplitudenabhängig.

In Schritt b) erfolgt die Zusammenführung aller Sensordaten auf dem Datenverarbeitungssystem des Wasserfahrzeugs. Es werden also die Messdaten der Sensoren an das Datenverarbeitungssystem des Wasserfahrzeug übertragen. Bei den Daten der akustischen Sensoren kann es beispielsweise sich um einzelne Frequenzen oder auch Frequenzspektren und deren Amplituden handeln. Die Zusammenführung aller Sensordaten hat den Vorteil, dass das Datenverarbeitungssystem des Wasserfahrzeugs eben auch die weiteren Schiffszustände, beispielsweise die Antriebsleistung, Betriebstemperaturen, Betriebsdauer, Ruderlage, Geschwindigkeit oder Drehzahl kennt und die Daten der akustischen Sensoren den weiteren Schiffzuständen zeitlich zuordnen kann. Auch dieses ist ein Vorteil der integrierten Lösung innerhalb des Wasserfahrzeugs. Da die Geräuschentwicklung des Fahrmotor oder der Welle natürlich von der Fahrtgeschwindigkeit abhängig ist, ist die Korrelation der Daten der akustischen Sensoren mit den weiteren Schiffsdaten notwendig. Diese Schiffszustände, die innerhalb der Datenverarbeitungssystem des Wasserfahrzeugs vorliegen werden daher zur Korrelation verwendet.

Der Fahrmotor treibt über die Welle den Propeller an. Gerade bei schneller Fahrt erzeugt der Propeller natürlich sehr viele Geräusche, insbesondere, wenn es durch die Geschwindigkeit zur Kavitation kommt. Derartige Geräusche sind aber kein Hinweis auf eine Anomalie, sondern sind unvermeidbar und entstehen in bekannter Weise und gehören somit zum Regelbetrieb. Vielmehr geht es erfindungsgemäß darum Anomalien im Regelbetrieb festzustellen, also beispielsweise aufgrund gewisser Geräusche im Fahrmotor auf einen möglichen oder sich anbahnenden Defekt hinzuweisen. Daher wird im Sinne der Erfindung mit Fahrmotor auch eine Überwachung des eigentlichen Motors und nicht des durch den Fahrmotor über die Welle angetriebenen Propellers gemeint.

Das Datenverarbeitungssystem weist eine selbstlernende Komponente zur Verknüpfung der von den akustischen Sensoren empfangenen Daten mit den Schiffszuständen auf. Diese selbstlernende Komponente ist bevorzugt eine künstliche Intelligenz und weist weiter beispielsweise ein neuronales Netzwerk, bevorzugt ein faltendes, besonders bevorzugt ein wenigstens dreilagiges faltendes neuronales Netzwerk, auf. Dem faltenden neuronalen Netzwerk ist weiter bevorzugt ein langes Kurzzeitgedächtnis nachgeschaltet. Hierdurch können in bevorzugter Weise zunächst Muster erkannt und anschließend Wechselbeziehungen effizient erkannt werden.

In Schritt c) erfolgt das Trainieren der selbstlernenden Komponente während der Seeerprobung des Wasserfahrzeug. Der Begriff Seeerprobung oder auch kurz Erprobung, ist dabei so zu verstehen, dass er die Fahrten umfasst, die das Schiff zur Überprüfung oder Herstellung der technischen Funktionsfähigkeit des Wasserfahrzeugs vornimmt. Die Seeerprobung kann dabei auch ein Teil längeren Fahrt sein, die zeitweise auch anderen Zwecken dient, wie Aufklärung oder dergleichen. In einem solchen Fall erfolgt das Verfahren im Teil der Seeerprobung der Fahrt. Insbesondere umfasst die Seeerprobung auch Fahrten, die alleine oder zeitweise zum Trainieren der selbstlernenden Komponente vorgenommen werden. Die Seeerprobung kann nach der Fertigstellung des Wasserfahrzeugs erfolgen, aber auch zu einem späteren Zeitpunkt, wenn das Wasserfahrzeug bereits in Betrieb ist. Vom Regelbetrieb unterscheidet sich die Seeerprobung dadurch, dass während der Seeerprobung nicht nur eine normale Besatzung an Bord ist, sondern auch Fachpersonal, insbesondere Fachpersonal, dass bei der Entwicklung oder dem Bau beteiligt ist an Bord sein kann. Es kann auch vorgesehen sein, dass das Fachpersonal per Datenverbindung die Systeme des Wasserfahrzeugs überwacht. Daher ist gerade die Seeerprobung für ein überwachtes Lernen besonders geeignet, da zu diesem Zeitpunkt Experten zur Verfügung stehen, die im Regelbetrieb eben nicht an Bord sind. Bei der Erprobung werden häufig ohnehin gezielt verschiedene Fahrzustände angefahren, um alle Komponenten zu testen. Während dieser Zeit kann die selbstlernende Komponente in einfacher und zuverlässiger Weise trainiert werden, insbesondere da zu diesem Zeitpunkt auch Fachpersonal anwesend ist, sodass insbesondere bevorzugt in dieser Phase ein überwachtes Lernen erfolgt. Dieses bedeutet, dass besonderes Fachpersonal, wie oben ausgeführt, zur Auswertung zur Verfügung stehen kann und damit beim Training der selbstlernenden Komponenten den erfassten Zuständen beispielsweise Werte wie "normal" oder "anormal" zuordnen kann. Überwachtes Lernen benötigt erheblich weniger Trainingsdaten, da die erfassten Trainingsdaten unmittelbar durch das überwachte Lernen sicher dem richtigen Ergebnis zugeordnet werden. Natürlich können nicht alle Zustände während der Erprobung getestet werden, die Erprobung ist jedoch darauf ausgelegt, alle Komponenten über den gesamten Auslegungsbereich zu testen, sodass die gesammelten und für das Training verwendeten Daten somit die gesamte Einsatzbreite des Wasserfahrzeugs abdecken. Durch dieses wenigstens teilweise überwachte Lernen ist ein sehr hoher Lernerfolg zu erzielen. Gleichzeitig wird sichergestellt, dass das System eben auf das konkrete Wasserfahrzeug trainiert ist. Selbst innerhalb einer Bootsklasse sind die Unterschiede unter Umständen deutlich, selbst Länge und Verdrängung variieren innerhalb einer Bootsklasse üblicherweise. Daher fallen Konzepte, die beispielsweise im Bereich von PKWs funktionieren aus, da dort eben alle Fahrzeuge prinzipiell identisch sind, wenigstens bei identischer Ausstattung. Damit bedeutet der Schritt c), dass hier ein menschlich unterstütztes Training der selbstlernenden Komponente stattfindet. Es handelt sich also nicht um ein System, welches nur aus Daten trainiert wird, sondern die in der Seeerprobung erfassten Daten werden durch Expertenwissen zugeordnet und das System so überwacht trainiert. Dieses ermöglicht den Verzicht auf historische Daten und ermöglicht gleichzeitig eine optimale Anpassung an die individuellen Charakteristika jedes einzelnen Schiffes. Natürlich kann im Anschluss, also im regulären Betrieb, ein nicht überwachtes Lernen fortgeführt werden, um eine kontinuierliche Verbesserung zu ermöglichen, die auf dem ersten überwachten Lernen dann aufbauen kann.

Nach diesem überwachten Training während der Seeerprobung erfolgt dann im regulären Betreib in Schritt d) die kontinuierliche Selbstüberwachung. Dabei vergleicht das selbstlernende System die Daten der akustischen Sensoren in Korrelation zu dem aktuellen Schiffszustand und vergleicht diese mit den eintrainierten Mustern, welche somit das Expertenwissen widerspiegeln. Hierbei erfolgt eine Selbstüberwachung dahingehend, Veränderungen zu erkennen, also eine Abweichung von dem eintrainierten Muster. Wird eine solche Anomalie detektiert, so erfolgt in Schritt e) eine Ausgabe einer Information über das Vorliegen einer Anomalie an die Besatzung. Bevorzugt wird durch die selbstlernende Komponente bereits eine Vorhersage über das möglicherweise betroffene Schiffsbauteil. Die Vorhersage kann vergleichsweise einfach sein, wenn das Schiffsbauteil über einen eigenen akustischen Sensor verfügt. Aber auch beispielsweise über zwei akustische Sensoren, welche großräumig Luftschall oder Körperschall erfassen, kann eine örtliche Lokalisierung erfolgen und diese Information zusätzlich in Schritt e) mit ausgegeben werden. Es kann aber alternativ auch dann der Benutzer sich die aktuellen Messdaten ansehen und daraus selber diese Schlüsse ziehen. Dieses setzt jedoch ein höheres Maß an Schulung der Besetzung voraus.

In einer weiteren Ausführungsform der Erfindung werden als akustische Sensoren sowohl Körperschallsensoren als auch Luftschallsensoren verwendet. In Predictive Maintenance System werden Körperschallsensoren eingesetzt, da es dabei um eine Überwachung einer konkreten Vorrichtung geht. Diese liefern präzise Daten für das Schiffsbauteil, an dem diese befestigt sind und dessen Körperschall diese erfassen. Zusätzlich werden aber auch gerade Luftschallsensoren verwendet, um bei einer großen Anzahl an Komponenten nicht jede einzeln überwachen zu müssen und so extrem viele Daten zu generieren. Zusätzlich ist es vergleichsweise einfach über beispielsweise zwei Luftschallsensoren auch eine Ortung der Schallquelle vorzunehmen und so das betroffene Schiffsbauteil mit ausreichender Genauigkeit zu lokalisieren.

In einer weiteren Ausführungsform der Erfindung wird wenigstens ein akustischer Sensor am Rumpf beziehungsweise am Druckkörper angeordnet. Besonders bevorzugt werden wenigstens zwei akustische Sensoren am Rumpf beziehungsweise am Druckkörper angeordnet. Hierdurch sind zum einen in besonders einfacher Weise Schallemissionen und damit die Auswirkung auf die akustische Signatur unmittelbar zu erfassen. Zum anderen bietet der Rumpf beziehungsweise der Druckkörper eine gute Möglichkeit auch Schall aus nicht konkret mit akustischen Sensoren bestückten Räumen zu erfassen und bei wenigstens zwei Sensoren auch zu lokalisieren.

In einer weiteren Ausführungsform der Erfindung werden nach Schritt c) Morphing-Algorithmen eingesetzt, um die in Schritt c) trainierte Datenbasis zu vergrößern. Beispielsweise könnten bei der Erprobung und somit in Schritt c) eine Fahrt mit 0 %, 25 % 50 %, 75 % und 100 % der Maschinenleistung durchgeführt und damit trainiert werden. Um nun die Zwischenzustände ebenfalls zu modellieren, kann ein Fahrzustand von beispielsweise von 66 % der Maschinenleistung aus diesen Daten entsprechend mittels der Morphing Algorithmen extrapoliert werden. Damit kann dann in Schritt d) auch ein Vergleich zu gemessenen Werten bei einer Maschinenleistung von 66 % optimiert durchgeführt werden. Die Verwendung eines Morphing Algorithmus führt hierbei zu einem besseren Ergebnis als beispielsweise die einfache lineare Extrapolation. Hierbei handelt es sich um Daten für den Regelbetrieb, also ohne Anomalie. Es geht also darum, denn Sollzustand auf diese Weise auf nicht trainierte Sollzustände im Regelbetrieb zu erweitern. Datensätze, welche eine Anomalie aufweisen, werden hierfür bevorzugt nicht herangezogen.

In einer weiteren Ausführungsform der Erfindung wird der Schritt d) unterbrochen und der Schritt c) wird erneut ausgeführt. Dieses kann beispielsweise sinnvoll sein, wenn beispielsweise in der Erprobung nur ein klimatisch eingeschränkter Bereich, beispielsweise Nordsee und Nordatlantik gefahren wird, ein Einsatz dann aber beispielsweise in den Tropen oder den arktischen Regionen erfolgt. In diesem Fall kann es sinnvoll sein, dort eine Ergänzung des Trainings vorzunehmen, um eine Anpassung an die geänderte Umgebung mit erfassen zu können. Auch kann es sinnvoll sein, Schritt c) immer nach einem vorgegebenen Zeitablauf zu wiederholen, um den Einfluss von normaler Alterung oder Verschleiß zu kompensieren. In diesem Fall kann es aber notwendig dem Schritt c) eine Überprüfung der überwachten System vorzunehmen, um den ordnungsgemäßen, störungsfreien Betrieb sicherzustellen. Ebenso kann dieses sinnvoll sein, wenn Kernkomponenten, beispielsweise der Dieselgenerator oder der Propeller ausgetauscht wurde.

In einer weiteren Ausführungsform der Erfindung werden an besonders relevanten Schiffsbauteilen akustische Sensoren zur Überwachung des jeweiligen Schiffsbauteil angeordnet. Die Schiffsbauteile sind ausgewählt aus der Liste umfassend Generator, Fahrmotor, Welle, Wellenlager, Druckkörperdurchführung, Pumpe, Ruderanlage, Hydraulikleitung. Diese Schiffsbauteile zeichnen sich zum einen durch eine vergleichsweise starke mechanische Bewegung und Belastung aus. Zum anderen unterliegen gerade auch deshalb insbesondere diese Schiffsbauteile dem Verschleiß, sodass der Auftritt einer Anomalie gerade bei diesen Schiffsbauteilen besonders wahrscheinlich ist. Zusätzlich führen Beeinträchtigungen hier regelmäßig auch zu den stärksten Beeinflussungen der akustischen Signatur und damit zur Entdeckungswahrscheinlichkeit des Wasserfahrzeugs. Daher ist die gezielte Überwachung gerade dieser Schiffsbauteile vorteilhaft, auch wenn dadurch die erfasste und zu verarbeitende Datenmenge erhöht wird. Bei der Anordnung der Sensoren würde der Fachmann den Empfehlungen nach der DIN ISO 20816-1:2017-03 folgen.

In einer weiteren Ausführungsform der Erfindung werden in besonders relevanten Schiffsräumen Luftschallsensoren verwendet. Die Schiffsräume sind ausgewählt aus der Liste umfassen Maschinenraum, Waffenraum. Diese Räume weisen sehr viele bewegte und belastete Bauteile auf. Eine vollständige Überwachung aller dieser Bauteile würde eine nicht mehr sinnvolle Datenmenge erzeugen, welche die Rechnerleistung für die Auswertung enorm steigern würde und daher auch den Energieverbrauch. Dieses würde wiederum die Reichweite des Wasserfahrzeugs reduzieren, was wiederum für die Überlebensfähigkeit nachteilig ist.

In einer weiteren Ausführungsform der Erfindung handelt es sich bei dem Wasserfahrzeug um ein militärisches Wasserfahrzeug, beispielsweise eine Korvette, eine Fregatte, einen Zerstörer, einen Kreuzer, einen Versorger, ein Minensuchboot, ein Minenjagdboot, ein Torpedoboot, einen Träger, beispielsweise einen Flugzeugträger oder einen Hubschrauberträger, ein Landungsschiff, ein Unterseeboot oder dergleichen.

Nachfolgend ist das erfindungsgemäße Verfahren anhand eines in den Zeichnungen dargestellten Ausführungsbeispiels näher erläutert.
- Fig. 1: Wasserfahrzeug
- Fig. 2: Flussdiagramm

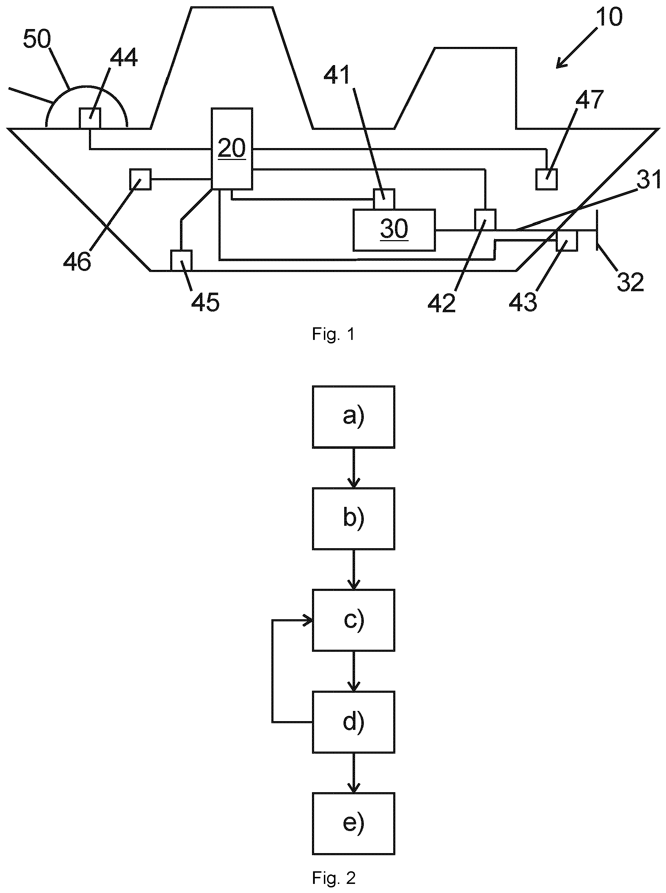

In Fig. 1 ist das Wasserfahrzeug 10, beispielsweise eine Fregatte dargestellt. Das Wasserfahrzeug 10 weist einen Fahrmotor 30, eine Welle 31 und einen Propeller 32 auf. Weiter weist das Wasserfahrzeug 10 einen Effektor 50 auf. Weiter weist das Wasserfahrzeug ein Datenverarbeitungssystem 20 auf. Das Datenverarbeitungssystem 20 dient beispielsweise und insbesondere der Steuerung der Schiffssysteme, beispielsweise des Fahrmotor 30. Beispielsweise wird hier eine Geschwindigkeitsvorgabe durch die Besatzung in eine Leistungsansteuerung des Fahrmotors 30 umgesetzt.

Erfindungsgemäß weist das Wasserfahrzeug 10 zusätzlich beispielhaft sieben akustische Sensoren 41, 42, 43, 44, 45, 46, 47 auf, welche alle direkt mit dem Datenverarbeitungssystem 20 verbunden sind, um die erfassten Daten zu übertragen.

Der erste Sensor 41 ist am Fahrmotor 30 angeordnet und misst den Körperschall des Fahrmotors 30 und kann so insbesondere Defekte des Fahrmotors 30 erfassen. An der Welle 31 sind ein zweiter Sensor 42 im Inneren des Wasserfahrzeugs 10 und ein dritter Sensor 43 im Außenbereich angeordnet. Der zweite Sensor 42 kann beispielsweise an einem Wellenlager angeordnet sein. Insbesondere der dritte Sensor 43 ist so angeordnet, dass dieser eben nicht leicht zugänglich ist, also nicht einfach nachträglich temporär für eine Diagnose angebracht werden kann und daher bevorzugt direkt von Anfang an integriert ist. Der vierte Sensor 44 ist am Effektor 50 angeordnet, beispielsweise am Wälzlager des Effektors 50. Ein fünfter Sensor 45 ist direkt am Rumpf des Wasserfahrzeugs 10 angeordnet und kann somit insbesondere jeden Schall erfassen, der von Wasserfahrzeug 10 über den Rumpf an die Umgebung abgegeben werden kann und so die akustische Signatur verschlechtern kann. Des weiteren sind ein sechster Sensor 46 und ein siebter Sensor 47 vorgesehen, die als Luftschallsensoren ausgeführt und zueinander beabstandet sind. Aus dem Laufzeitunterschied zwischen dem sechsten Sensor 46 und dem siebenten Sensor 47 ist die Position einer Schallquelle wenigstens grob abschätzbar.

Fig. 2 zeigt ein Fließschema des Verfahrens.

Das Verfahren weist die folgenden Schritte auf:
a) Einbau akustischer Sensoren beim Bau des Wasserfahrzeug,
b) Verbinden der akustischen Sensoren mit einem Datenverarbeitungssystem des Wasserfahrzeug, wobei das Datenverarbeitungssystem eine selbstlernende Komponente zur Korrelation der von den akustischen Sensoren empfangenen Daten mit Schiffszuständen aufweist,
c) Trainieren der selbstlernenden Komponente während der Seeerprobung des Wasserfahrzeug,
d) Kontinuierliche Selbstüberwachung zur Erkennung von Anomalien im Regelbetrieb,
e) Ausgabe einer Information über das Vorliegen einer Anomalie an die Besatzung.

Zusätzlich gibt es die Möglichkeit aus dem laufenden Betrieb in Schritt d) zum Training in Schritt c) bei Bedarf zurückzukehren.

### Bezugszeichen

- 10: Wasserfahrzeug
- 20: Datenverarbeitungssystem
- 30: Fahrmotor
- 31: Welle
- 32: Propeller
- 41: erster Sensor
- 42: zweiter Sensor
- 43: dritter Sensor
- 44: vierter Sensor
- 45: fünfter Sensor
- 46: sechster Sensor
- 47: siebenter Sensor
- 50: Effektor

## Patentansprüche

1. Verfahren zur frühzeitigen Erkennung von Anomalien über Schallemissionen innerhalb des Wasserfahrzeugs (10) in einem Wasserfahrzeug (10), wobei das Verfahren die folgenden Schritte aufweist:
a) Einbau akustischer Sensoren (41, 42, 43, 44, 45, 46, 47) beim Bau des Wasserfahrzeug innerhalb des Wasserfahrzeugs ,
b) Verbinden der akustischen Sensoren (41, 42, 43, 44, 45, 46, 47) mit einem Datenverarbeitungssystem (20) des Wasserfahrzeugs (10), wobei das Datenverarbeitungssystem (20) eine selbstlernende Komponente zur Verknüpfung der von den akustischen Sensoren (41, 42, 43, 44, 45, 46, 47) empfangenen Daten mit Schiffszuständen aufweist,
c) Trainieren der selbstlernenden Komponente während der Seeerprobung des Wasserfahrzeug (10),
d) Kontinuierliche Selbstüberwachung zur Erkennung von Anomalien im Regelbetrieb,
e) Ausgabe einer Information über das Vorliegen einer Anomalie an die Besatzung.

2. Verfahren nach Anspruch 1, **dadurch gekennzeichnet, dass** als akustische Sensoren (41, 42, 43, 44, 45, 46, 47) sowohl Körperschallsensoren (41, 42, 43, 44, 45) als auch Luftschallsensoren (46, 47) verwendet werden.

3. Verfahren nach einem der vorstehenden Ansprüche, **dadurch gekennzeichnet, dass** wenigstens ein akustischer Sensor (45) am Rumpf beziehungsweise am Druckkörper angeordnet wird.

4. Verfahren nach einem der vorstehenden Ansprüche, **dadurch gekennzeichnet, dass** nach Schritt c) Morphing-Algorithmen eingesetzt werden, um die in Schritt c) trainierte Datenbasis zu vergrößern.

5. Verfahren nach einem der vorstehenden Ansprüche, **dadurch gekennzeichnet, dass** der Schritt d) unterbrochen wird und der Schritt c) erneut ausgeführt wird.

6. Verfahren nach einem der vorstehenden Ansprüche, **dadurch gekennzeichnet, dass** an besonders relevanten Schiffsbauteilen akustische Sensoren (41, 42, 43, 44) zur Überwachung des jeweiligen Schiffsbauteil angeordnet werden, wobei die Schiffsbauteile ausgewählt sind aus der Liste umfassend Generator, Fahrmotor (30), Welle (31), Wellenlager, Druckkörperdurchführung, Pumpe, Ruderanlage, Hydraulikleitung.

7. Verfahren nach einem der vorstehenden Ansprüche, **dadurch gekennzeichnet, dass** in besonders relevanten Schiffsräumen Luftschallsensoren verwendet werden, wobei die Schiffsräume ausgewählt sind aus der Liste umfassen Maschinenraum, Waffenraum.
